# EUROPÄISCHE PATENTSCHRIFT

(11) **EP 1 533 770 B1**
(45) Veröffentlichungstag und Bekanntmachung des Hinweises auf die Patenterteilung: **09.11.2011**
(21) Anmeldenummer: 04021024.7
(22) Anmeldetag: 03.09.2004
(51) Int. Cl.: G08C 15/00

(54) **Anschlussmodul zum Anschliessen eines Sensors an einen Feldbus**
Connection module for connecting a sensor to a field bus
Module de connexion pour connecter un capteur avec un bus de secteur

(30) Priorität: 14.11.2003 DE 10353345
(43) Veröffentlichungstag der Anmeldung: 25.05.2005
(73) Patentinhaber: SICK AG, 79183 Waldkirch (DE)
(72) Erfinder: Aschenbrenner, Johannes, 79312 Emmendingen (DE)
(74) Vertreter: Manitz, Finsterwald & Partner GbR

(56) Entgegenhaltungen:
- US-A1- 2003 040 881
- US-B1- 6 571 132

## Beschreibung

Die Erfindung betrifft ein Anschlussmodul zum Anschließen eines Sensors, insbesondere eines optoelektronischen Sensors, an einen Feldbus, mit einer Sensorschnittstelle zum Verbinden des Anschlussmoduls mit einer Schnittstelle eines Sensors, einer seriellen Busschnittstelle zum Verbinden des Anschlussmoduls mit einer Schnittstelle eines Feldbusses, und einer Gateway-Schaltung, die mit der Busschnittstelle und der Sensorschnittstelle verbunden ist, um an der Busschnittstelle empfangene Daten in ein Datenformat eines angeschlossenen Sensors zu konvertieren und an der Sensorschnittstelle auszugeben, und um an der Sensorschnittstelle empfangenen Daten in ein Datenformat des Feldbusses zu konvertieren und an der Busschnittstelle auszugeben.

Hintergrund der Erfindung ist die Vernetzung von Sensoren, beispielsweise von eindimensionalen oder zweidimensionalen optischen Codelesern oder von Lasermesssystemen, über einen digitalen Feldbus, beispielsweise vom Typ Profibus oder DeviceNet. Hierfür ist es bekannt, die Sensoren mit einer eigenen Feldbusschnittstelle zu versehen, die ein Anschließen des Sensors an den Feldbus und eine Kommunikation zwischen dem Sensor und dem Feldbus ermöglicht. Eine in den Sensor integrierte Feldbusschnittstelle macht das eigentliche Sensormodul jedoch unerwünscht teuer und für manche Anwendungen unerwünscht voluminös. Außerdem ist der betreffende Sensor zwar an einen bestimmten Feldbus angepasst; der Sensor lässt sich jedoch nicht mehr ohne weiteres für andere Feldbustypen verwenden.

Alternativ zu einer eigenen Feldbusschnittstelle ist es bekannt, den betreffenden Sensor mit einem Anschlussmodul zu versehen, das eine Sensorschnittstelle besitzt, die eine Verbindung mit einer seriellen Schnittstelle des Sensors ermöglicht. Das Anschlussmodul ist mit einer so genannten Gateway-Schaltung verbunden, die die an der Sensorschnittstelle des Anschlussmoduls ausgetauschten Daten in das Format des Feldbusses übersetzt und umgekehrt, und die zu diesem Zweck über eine Busschnittstelle mit dem Feldbus verbunden ist. Das Anschlussmodul und die Gateway-Schaltung dienen somit zur Anpassung sowohl der Hardware (jeweilige Schnittstelle) als auch der Datenformate (Busprotokoll) zwischen Feldbus und Sensor, wobei die Gateway-Schaltung üblicherweise eine serielle Sensorschnittstelle an einen bestimmten Feldbustyp adaptiert. Um den Sensor für den Feldbus zu konfigurieren und eine Kommunikation mit dem Feldbus zu ermöglichen, muss der Anwender zwei Geräte parametrieren, nämlich den Sensor und die zwischengeschaltete Gateway-Schaltung.

Bekannte Anschlussmodule erweisen sich insbesondere bei optoelektronischen Sensoren als unzureichend, da diese zusätzlich zu einer seriellen Datenschnittstelle digitale Schalteingänge und -ausgänge besitzen und da deshalb zusätzliche Verschaltungen erforderlich sind, um die gewünschte Anpassung an einen bestimmten Feldbus zu bewirken. Außerdem ist bei den bekannten Anschlussmodulen die Parametrierung, d.h. die Anpassung der Gateway-Schaltung an die Feldbus-Adressierung und das Feldbus-Protokoll unerwünscht aufwendig, da zwei Geräte (Sensor und Gateway-Schaltung) angesprochen werden müssen.

US 6,571,132 zeigt eine Anordnung zum Anschluss einer Vielzahl von Transducern an einen Feldbus. Die Transducer sind untereinander durch einen internen Bus miteinander verbunden. Ein Datenaustausch findet zwischen den Transducern statt. In einem Speicher des Transducers ist Information über den Transducer und seine Konfiguration abgelegt.

Es ist die Aufgabe der vorliegenden Erfindung, in einem über einen Feldbus verbundenen Sensornetzwerk die Einbindung und den Austausch von Anschlussmodulen und Sensoren zu erleichtern.

Diese Aufgabe wird mit einem Anschlussmodul mit den Merkmalen des Anspruches 1 und ein Verfahren zum Anschließen eines Sensors mit den Merkmalen des Anspruches 8 gelöst. Unteransprüche sind auf bevorzugte Ausführungsformen gerichtet.

Ein erfindungsgemäßes Anschlussmodul zeichnet sich insbesondere dadurch aus, dass die Sensorschnittstelle als eine Parallelschnittstelle mit einer seriellen Datenschnittstelle und wenigstens einem separaten, hierzu parallelen Schalteingang/ausgang ausgebildet ist, und dass in das Anschlussmodul eine I/O-Schaltung integriert ist, die mit der Busschnittstelle und der Sensorschnittstelle verbunden ist, um an der Busschnittstelle seriell empfangene Schaltdaten in Schaltsignale zu konvertieren und an dem parallelen Schalteingang/-ausgang der Sensorschnittstelle auszugeben, und um an dem Schalteingang/-ausgang der Sensorschnittstelle parallel empfangene Schaltsignale in Schaltdaten zu konvertieren und an der Busschnittstelle seriell auszugeben.

Dieses Anschlussmodul zeichnet sich also dadurch aus, dass die Sensorschnittstelle als eine Parallelschnittstelle ausgebildet ist, die zusätzlich zu der üblichen seriellen Datenschnittstelle wenigstens einen hierzu parallelen Schalteingang und/oder -ausgang besitzt. Ferner ist das Anschlussmodul mit einer so genannten I/O-Schaltung versehen. Diese übersetzt Schaltdaten, die in dem an der Busschnittstelle des Anschlussmoduls empfangenen seriellen Datenwort (String) enthalten sind, in digitale Schaltsignale, die direkt über den parallelen Schalteingang/-ausgang der Sensorschnittstelle an einen angeschlossenen Sensor übermittelt werden können. Auch in umgekehrter Richtung sorgt die in das Anschlussmodul integrierte I/O-Schaltung für eine Konvertierung von digitalen Schaltsignalen, die an dem parallelen Schalteingang/-ausgang der Sensorschnittstelle von einem angeschlossenen Sensor empfangen werden, in ein Datenwort, das an der (einzigen) seriellen Busschnittstelle gemeinsam mit den an der seriellen Datenschnittstelle empfangenen Sensordaten ausgegeben werden kann. Die ebenfalls in dem Anschlussmodul enthaltene Gateway-Schaltung sorgt dabei für die erforderliche Umwandlung der seriellen Sensordaten, die zwischen der Busschnittstelle und der seriellen Datenschnittstelle der Sensorschnittstelle ausgetauscht werden.

Indem das Anschlussmodul mit einem oder mehreren zusätzlichen parallelen Schalteingängen/-ausgängen ausgestattet ist und in das Anschlussmodul wenigstens eine I/O-Schaltung integriert ist, entfällt die Notwendigkeit von separaten I/O-Modulen, die parallel zu einem herkömmlichen Anschlussmodul mit den digitalen Schalteingängen/ausgängen des Sensors einerseits und dem Feldbus über eine eigene Feldbusschnittstelle andererseits verbunden werden müssen. Außerdem entfällt die Notwendigkeit, derartige zusätzliche I/O-Module für den speziell verwendeten Feldbus zu konfigurieren. Der Sensor wird erfindungsgemäß also über ein einziges Anschlussmodul mit integrierter Gateway-Schaltung und integrierter I/O-Schaltung an den Feldbus angeschlossen. Die Schaltsignale des Sensors können auf diese Weise direkt im Prozessabbild der Steuerung berücksichtigt und verwendet werden, so dass sich die Steuerung der Schalteingänge/-ausgänge des Sensors deutlich vereinfacht.

Der Geräteaufwand ist erheblich verringert, da lediglich ein einziges Anschlussmodul erforderlich ist, um den betreffenden Sensor an den Feldbus anzuschließen, selbst wenn der Sensor einen oder mehrere Schalteingänge/-ausgänge besitzt, wie dies bei optoelektronischen Sensoren typischerweise der Fall ist.

Da die I/O-Schaltung in das Anschlussmodul integriert ist, ist eine Verbindung zwischen den Schalteingängen/-ausgängen des Sensors und der I/O-Schaltung besonders einfach über sehr kurze Leitungen möglich.

Auch ein eventuell erforderlicher Austausch des Anschlussmoduls oder des angeschlossenen Sensors ist auf einfache Weise möglich, da für die hierzu erforderliche Parametrierung des ausgetauschten Geräts keine zusätzlichen, separaten I/O-Module berücksichtigt werden müssen.

Gemäß einer vorteilhaften Ausführungsform des Anschlussmoduls ist die wenigstens eine I/O-Schaltung in die Gateway-Schaltung integriert, d.h. die I/O-Schaltung ist Teil der Gateway-Schaltung. In diesem Fall entfällt also sogar die Notwendigkeit, die I/O-Schaltung als separate Schaltungseinheit bzw. -platine auszubilden, sondern die Konvertierung der seriellen Schaltdaten in parallele Schaltsignale - und umgekehrt - erfolgt durch eine gemeinsame Gateway-I/O-Schaltung. Die Verbindung der I/O-Schaltung mit der Busschnittstelle und der Sensorschnittstelle verläuft in diesem Fall über die eigentliche Gateway-Schaltung.

Weiterhin ist es von Vorteil, wenn die Gateway-Schaltung als eine vom Anwender auswechselbare Einheit ausgebildet ist, insbesondere als eine Steckkarte, die zusätzlich durch Schrauben gesichert sein kann. Als eine vom Anwender auswechselbare Einheit ist im Zusammenhang mit der Erfindung generell eine Einheit zu verstehen, die entweder werkzeugfrei oder mit einfachem Werkzeug (wie beispielsweise Schraubendreher), und jedenfalls ohne Lötvorgänge ausgetauscht werden kann. Auch eine separate I/O-Schaltung oder eine kombinierte Gateway-I/O-Schaltung kann als eine vom Anwender auswechselbare Einheit ausgebildet sein. In diesen Fällen kann das Anschlussmodul aufgrund des modularen Aufbaus besonders flexibel an unterschiedliche Feldbustypen angepasst werden. Im Falle eines Defekts der betreffenden Schaltung kann diese besonders einfach ersetzt werden, ohne dass das gesamte Anschlussmodul ausgetauscht werden muss.

Weiterhin ist es bevorzugt, wenn die Sensorschnittstelle, die Busschnittstelle, die Gateway-Schaltung und die I/O-Schaltung des Anschlussmoduls in einem gemeinsamen Gehäuse untergebracht sind.

Gemäß einer vorteilhaften Ausführungsform ist in das Anschlussmodul ferner ein Permanentspeicher zum Speichern von Betriebsparametern integriert, auf deren Grundlage die Gateway-Schaltung und die I/O-Schaltung mit dem Feldbus kommunizieren können. Durch einen derartigen Permanentspeicher bleiben die erforderlichen Betriebsparameter, beispielsweise die Identifikationsnummer des angeschlossenen Sensors innerhalb des Netzwerks, die zu verwendende Datenlänge oder die zu verwendende Baud-Rate, stets gespeichert, solange die gespeicherten Parameter nicht gezielt neu überschrieben werden. Dadurch bleiben die Betriebsparameter erhalten, selbst wenn das System zeitweilig abgeschaltet oder der zugeordnete Sensor ausgetauscht wird.

Es ist bevorzugt, wenn auch der genannte Permanentspeicher als eine vom Anwender auswechselbare Einheit ausgebildet ist, beispielsweise als auswechselbare Speicherkarte. In diesem Fall kann beispielsweise das Anschlussmodul mit zugehöriger Gateway-Schaltung und/oder I/O-Schaltung ausgetauscht werden, wobei die für die Kommunikation mit dem Feldbus erforderlichen Betriebsparameter auf einfache Weise erhalten bleiben, indem der Permanentspeicher aus dem ausgetauschten Anschlussmodul entnommen und in das neue Anschlussmodul eingesetzt wird.

Vorzugsweise ist der Permanentspeicher mit einem eigenen Mikrocontroller versehen, der einen direkten Datenaustausch des Permanentspeichers mit der seriellen Datenschnittstelle des Anschlussmoduls ermöglicht.

Alternativ hierzu kann der Permanentspeicher auch direkt mit der Gatewayschaltung und der I/O-Schaltung verbunden sein.

Erfindungsgemäß sind die Gateway-Schaltung und die I/O-Schaltung dergestalt konfiguriert, dass die für die Kommunikation mit dem Feldbus zu verwendenden Betriebsparameter von einem angeschlossenen Sensor über die Sensorschnittstelle an die Gateway-Schaltung und an die I/O-Schaltung übermittelt werden können. So können die für die Kommunikation mit dem Feldbus erforderlichen Betriebsparameter von dem angeschlossenen Sensor auf die aktiven Schaltungen des Anschlussmoduls übertragen werden. Der Anwender muss also nicht zwei Geräte parametrieren, sondern es genügt, die erforderlichen Betriebsparameter lediglich an dem Sensor einzustellen. Von diesem werden die Betriebsparameter zu der Gateway-Schaltung und der I/O-Schaltung des Anschlussmoduls übertragen. Die Parametrierung kann somit - für den Sensor und das Anschlussmodul gemeinsam - auf einfache Weise innerhalb der Bedienoberfläche des angeschlossenen Sensors erfolgen.

Vorzugsweise ist die die Gateway-Schaltung einschließlich der I/O-Schaltung dergestalt mit der Sensorschnittstelle verschaltet, dass die Betriebsparameter automatisch bei Betriebsstart - und insbesondere während eines begrenzten Parametrierungszeitintervalls nach Betriebsstart - an der Sensorschnittstelle des Anschlussmoduls eingelesen werden. Mit anderen Worten sind die Gateway-Schaltung und die I/O-Schaltung dergestalt konfiguriert, dass nach Betriebsstart eine Datenverbindung zwischen der Sensorschnittstelle des Anschlussmoduls und dem angeschlossenen Sensor aufgebaut werden kann, um Betriebsparameter von dem Sensor an das Anschlussmodul zu übertragen. Maßgebliches Ereignis für die Übertragung der Betriebsparameter kann der Betriebsstart des Anschlussmoduls und/oder des angeschlossenen Sensors sein; falls beide Geräte nicht gleichzeitig eingeschaltet werden, erfolgt die Übertragung insbesondere bei Betriebsstart des später eingeschalteten Geräts.

Ferner ist es bevorzugt, wenn das das Anschlussmodul mit einem oder dem bereits genannten Permanentspeicher versehen ist, in dem die über die Sensorschnittstelle empfangenen Betriebsparameter speicherbar sind. Dieser Permanentspeicher kann direkt mit der Sensorschnittstelle oder indirekt über die Gateway-Schaltung und die I/O-Schaltung mit der Sensorschnittstelle verbunden sein.

Hierbei kann der Permanentspeicher dergestalt konfiguriert sein, dass unmittelbar nach Betriebsstart des Anschlussmoduls und noch vor einem Übermitteln von Betriebsparametern von dem angeschlossenen Sensor diejenigen Betriebsparameter, die in dem Permanentspeicher gespeichert sind, von dem Permanentspeicher über die Sensorschnittstelle an den angeschlossenen Sensor übermittelt werden. Auf diese Weise können die gespeicherten Betriebsparameter von dem Permanentspeicher indirekt über die Sensorschnittstelle und den angeschlossenen Sensor an die Gateway-Schaltung und die I/O-Schaltung übermittelt werden. Dadurch kann eine direkte Verschaltung zwischen Permanentspeicher einerseits und Gateway-Schaltung und I/O-Schaltung andererseits entfallen.

Bei dieser Weiterbildung können die Gateway-Schaltung und die I/O-Schaltung auch dergestalt konfiguriert sein, dass sie, wenn nach einem Betriebsstart des Anschlussmoduls keine Betriebsparameter von dem angeschlossenen Sensor empfangen werden, diejenigen Betriebsparameter für die Kommunikation mit dem Feldbus verwenden, die in dem Permanentspeicher vor dem letzten Betriebsstart des Anschlussmoduls gespeichert worden sind. Falls also das Anschlussmodul nach Betriebsstart ausnahmsweise keine Betriebsparameter von einem angeschlossenen Sensor empfängt, so kommuniziert das Anschlussmodul mit dem Feldbus aufgrund der zuletzt empfangenen und gespeicherten Betriebsparameter. Dadurch ist es beispielsweise möglich, einen zuvor angeschlossenen Sensor durch eine einfache Schalteinheit oder einen einfachen Aktuator zu ersetzen, die nicht zur Initialisierung des Anschlussmoduls bzw. des Permanentspeichers mit Betriebsparametern ausgebildet sind. Dennoch können derartige einfache Einheiten nach dem Austausch mit dem Feldbus kommunizieren, da das Anschlussmodul der Kommunikation nun die zuvor übertragenen und abgespeicherten Betriebsparameter zugrunde legt.

Die Erfindung bezieht sich auch auf ein Verfahren zum Anschließen eines Sensors, insbesondere eines optoelektronischen Sensors, über ein Anschlussmodul an einen Feldbus, bei dem ein an ein Anschlussmodul angeschlossener Sensor über eine Sensorschnittstelle des Anschlussmoduls Betriebsparameter an eine Gateway-Schaltung des Anschlussmoduls übermittelt, und bei dem die Gateway-Schaltung auf Grundlage der von dem Sensor übermittelten Betriebsparameter mit dem Feldbus kommuniziert, wobei das Anschlussmodul nicht unbedingt mit einer I/O-Schaltung ausgestattet sein muss.

Dieses Verfahren ermöglicht es, ähnlich wie bei der erläuterten Weiterbildung des Anschlussmoduls, dass der Anwender grundsätzlich nicht das Anschlussmodul und einen hieran angeschlossenen Sensor separat parametrieren muss. Vielmehr ist es ausreichend, wenn der Anwender über die ohnehin vorgesehene Bedienoberfläche den angeschlossenen Sensor parametriert, d.h. mit den für die Kommunikation mit dem Feldbus erforderlichen Betriebsparametern versieht. Diese Betriebsparameter können dann von dem Sensor über die Sensorschnittstelle des Anschlussmoduls an die Gateway-Schaltung einschließlich einer eventuellen I/O-Schaltung des Anschlussmoduls übertragen werden.

Auch bei diesem Verfahren kann es sich bei den genannten Betriebsparametern beispielsweise um eine Identifikationsnummer des Sensors innerhalb des Netzwerks bzw. des Feldbus-Systems, um eine zu verwendende Datenlänge oder um eine zu verwendende Baud-Rate handeln.

Vorzugsweise werden die Betriebsparameter von dem angeschlossenen Sensor an die Gateway-Schaltung des Anschlussmoduls bei Betriebsstart des Anschlussmoduls oder des Sensors automatisch übertragen, wobei die Gateway-Schaltung die Sensorschnittstelle insbesondere lediglich während eines begrenzten Parametrierungszeitintervalls ab Betriebsstart abfragt. Maßgebliches Ereignis für die Übertragung der Betriebsparameter kann auch hier der Betriebsstart des Anschlussmoduls und/oder des angeschlossenen Sensors sein; falls beide Geräte nicht gleichzeitig eingeschaltet werden, erfolgt die Übertragung insbesondere bei Betriebsstart des später eingeschalteten Geräts.

Es ist bevorzugt, wenn die von dem Sensor übertragenen Betriebsparameter in einem Permanentspeicher des Anschlussmoduls gespeichert werden. In diesem Fall ist es möglich, dass unmittelbar nach Betriebsstart des Anschlussmoduls oder des Sensors und noch vor dem erläuterten Übermitteln von Betriebsparametern von dem Sensor an die Gateway-Schaltung diejenigen Betriebsparameter, die bereits in dem Permanentspeicher des Anschlussmoduls gespeichert sind, von dem Permanentspeicher an den angeschlossenen Sensor übermittelt werden.

Bei einer vorteilhaften Ausführungsform dieses Verfahrens werden in dem Fall, dass nach einem Betriebsstart des Anschlussmoduls keine Betriebsparameter an der Sensorschnittstelle von dem Sensor empfangen werden, diejenigen Betriebsparameter für die Kommunikation mit dem Feldbus verwendet, die in dem genannten Permanentspeicher bereits vor dem letzten Betriebsstart des Anschlussmoduls gespeichert worden sind. Mit anderen Worten verwendet das Anschlussmodul die zuletzt empfangenen und gespeicherten Betriebsparameter, falls nach einem Neustart keine neuen Betriebsparameter an der Sensorschnittstelle empfangen werden. Dies kann beispielsweise dann der Fall sein, wenn der zuvor angeschlossene Sensor zwischenzeitlich durch eine einfache Einheit, wie eine I/O-Schaltung oder einen Aktuator, ersetzt worden ist, die keine Initialisierung des Anschlussmoduls mit Betriebsparametern gestattet. In diesem Fall kann die betreffende Einheit dennoch über den Feldbus ohne weitere Parametrierungsmaßnahmen angesprochen werden, da das Anschlussmodul auf die zuletzt gespeicherten Betriebsparameter zurückgreifen kann.

Schließlich ist es bei dem erläuterten Verfahren auch von Vorteil, wenn die Betriebsparameter in einem vom Anwender auswechselbaren Permanentspeicher des Anschlussmoduls gespeichert werden. In diesem Fall kann das verwendete Anschlussmodul ausgetauscht werden, ohne dass eine Neuparametrierung erforderlich ist, da der Permanentspeicher mit den zuvor verwendeten Betriebsparametern ausgewechselt und somit in dem neuen Anschlussmodul eingesetzt werden kann.

Weitere Ausführungsformen der Erfindung sind in den Unteransprüchen beschrieben. Die Erfindung wird nachfolgend beispielhaft unter Bezugnahme auf die Zeichnungen erläutert.
- Fig. 1: zeigt schematisch den Aufbau eines Anschlussmoduls, das mit einem Feldbus und einem optoelektronischen Sensor verbunden ist.
- Fig. 2: zeigt dieses Anschlussmodul in einer Perspektivansicht.

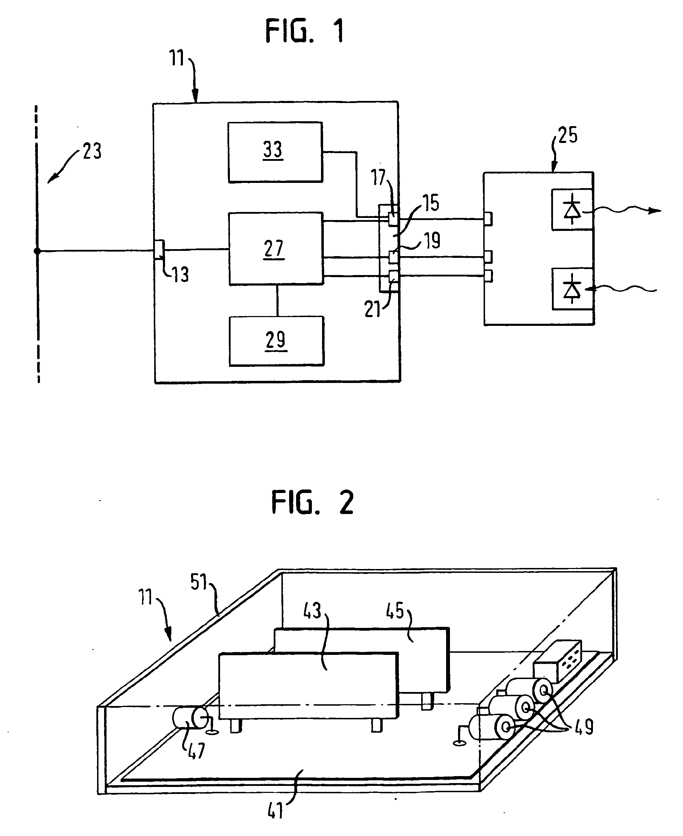

Fig. 1 zeigt in einem Blockschaltbild ein Anschlussmodul 11 mit einer seriellen Busschnittstelle 13 und einer parallelen Sensorschnittstelle 15. Diese besitzt eine serielle Datenschnittstelle 17 und - parallel hierzu - einen Schalteingang 19 und einen Schaltausgang 21. Das Anschlussmodul 11 ist über die Busschnittstelle 13 mit einem Feldbus 23 beispielsweise vom Typ Profibus oder DeviceNet verbunden. Ferner ist das Anschlussmodul 11 über die serielle Datenschnittstelle 17 und über den Schalteingang 19 und den Schaltausgang 21 der Sensorschnittstelle 15 mit einem optoelektronischen Sensor 25, beispielsweise einem optischen Codeleser verbunden.

Weiterhin besitzt das Anschlussmodul 11 eine Gateway-Schaltung 27, die mit der Busschnittstelle 13 und der seriellen Datenschnittstelle 17 der Sensorschnittstelle 15 verbunden ist. Die Gateway-Schaltung 27 dient zur Konvertierung der zwischen der Busschnittstelle 13 und der Sensorschnittstelle 15 ausgetauschten Daten in das jeweilige Datenformat, wie nachfolgend noch erläutert wird.

Mit der Gateway-Schaltung 27 ist eine I/O-Schaltung 29 verbunden, die zur Konvertierung speziell der zwischen der Busschnittstelle 13 und dem Schalteingang 19 und Schaltausgang 21 ausgetauschten Schaltdaten bzw. Schaltsignale dient, wie ebenfalls nachfolgend noch erläutert wird. Die I/O-Schaltung 29 ist zu diesem Zweck indirekt über die Gateway-Schaltung 27 zum einen mit der Busschnittstelle 13 und zum anderen mit dem Schalteingang 19 und dem Schaltausgang 21 der Sensorschnittstelle 15 verbunden.

Ferner besitzt das Anschlussmodul 11 einen optionalen Permanentspeicher 33 zum Speichern von Betriebsparametern. Der Permanentspeicher 33 ist mit der seriellen Datenschnittstelle 17 der Sensorschnittstelle 15 verbunden. Alternativ oder zusätzlich kann der Permanentspeicher 33 jedoch auch direkt mit der Gateway-Schaltung 27 verbunden sein.

Anstelle einer einzigen I/O-Schaltung 29 können auch mehrere I/O-Schaltungen vorgesehen sein, entsprechend der Anzahl der Schalteingänge/-ausgänge 19, 21.

Das Anschlussmodul 11 ist ferner mit einer in Fig. 1 nicht gezeigten Energieversorgung versehen, bei der es sich beispielsweise um eine 24V-Spannungsversorgung handeln kann. Vorzugsweise versorgt die Energieversorgung das Anschlussmodul 11 und den optoelektronischen Sensor 25 gemeinsam mit der erforderlichen Betriebsspannung, so dass der Betriebsstart dieser beiden Geräte generell auch gleichzeitig erfolgt. Die Verbindung zwischen dem Anschlussmodul 11 und dem Sensor 25 erfolgt über einen einzigen gemeinsamen Kabelstrang.

Fig. 2 zeigt eine mögliche Ausführungsform des Anschlussmoduls 11 gemäß Fig. 1 in einer schematischen Perspektivansicht. Hier ist eine passive Grundplatine 41 vorgesehen, an der eine vom Anwender auswechselbare Steckplatine 43 montiert ist, die sowohl die Gateway-Schaltung 27 als auch die I/O-Schaltung 29 gemäß Fig. 1 einschließlich eines Mikrocontrollers enthält.

Ferner ist an der Grundplatine 21 eine weitere vom Anwender auswechselbare Steckkarte 45 eingesetzt, die den Permanentspeicher 33 gemäß Fig. 1 gemeinsam mit einem zugeordneten Mikrocontroller trägt.

Außerdem ist die Grundplatine 41 mit einem Seriell-Steckverbinder 47, der als Busschnittstelle 13 gemäß Fig. 1 dient, und mit Parallel-Klemmverbindern 49 versehen, die als serielle Datenschnittstelle 17 bzw. Schalteingang 19 und Schaltausgang 21 der Sensorschnittstelle 15 gemäß Fig. 1 dienen.

Die Grundplatine 41 verbindet die Kontaktierungen für die Gateway-I/O-Steckplatine 43, die Kontaktierungen für die optionale Permanentspeicher-Steckkarte 45, den Seriell-Steckverbinder 47 und die Parallel-Klemmverbinder 49 über in Fig. 2 nicht gezeigte Leiterbahnen.

Die Grundplatine 41, die Gateway-I/O-Steckplatine 43, die Permanentspeicher-Steckkarte 45, der Seriell-Steckverbinder 47 und die Parallel-Klemmverbinder 49 sind innerhalb eines gemeinsamen Gehäuses 51 angeordnet, das in der Ansicht gemäß Fig. 2 an der Oberseite und an den beiden dem Betrachter zugewandten Seiten geöffnet ist.

Bei dem Anschlussmodul 11 handelt es sich somit um ein im Wesentlichen passives Modul mit einer aktiven Gateway-I/O-Steckplatine 43 und einer aktiven Permanentspeicher-Steckkarte 45.

Das in den Fig. 1 und 2 gezeigte Anschlussmodul 11 dient zum Anschließen des Sensors 25 an den Feldbus 23. Dabei dient das Anschlussmodul 11 zum einen als Adapter zwischen der parallelen Schnittstelle des Sensors 25 und der seriellen Schnittstelle des Feldbusses 23. Zum anderen erfolgt innerhalb des Anschlussmoduls 11 eine Übersetzung der an der Sensorschnittstelle 15 mit dem Sensor 25 ausgetauschten Daten in das Format der an der Busschnittstelle 13 ausgetauschten Daten, und umgekehrt. Diese beiderseitige Datenkonvertierung erfolgt in der Gateway-Schaltung 27.

Da eine Gateway-Schaltung üblicherweise eine serielle Datenschnittstelle (Schnittstelle 17) an ein Bussystem adaptiert, ist ergänzend zu der Gateway-Schaltung 27 wenigstens eine I/O-Schaltung 29 vorgesehen, die zusätzlich in das Anschlussmodul 11 integriert ist. Die I/O-Schaltung 29 ermöglicht also die direkte Kommunikation des Feldbusses 23 mit den Schalteingängen/-ausgängen des Sensors 25. In dem Ausführungsbeispiel gemäß Fig. 1 kommuniziert die I/O-Schaltung 29 zu diesem Zweck indirekt über die Gateway-Schaltung 27 mit der Busschnittstelle 13 sowie mit dem Schalteingang 19 und dem Schaltausgang 21, wobei alternativ auch eine direkte Verbindung mit den Schnittstellen 13, 19, 21 vorgesehen sein kann.

Ein besonderer Vorteil des in den Fig. 1 und 2 gezeigten Anschlussmoduls 11 besteht darin, dass dieses aufgrund der integrierten I/O-Schaltung 29 eine Anbindung des seriellen Feldbusses 23 an die parallele Schnittstelle des Sensors 25 gestattet, ohne dass zusätzlich zu dem eigentlichen Anschlussmodul 11 weitere I/O-Module erforderlich sind, die zwischen dem Sensor 25 und dem Feldbus 23 zu verschalten sind. Die I/O-Schaltung 29 übernimmt innerhalb des Anschlussmoduls 11 die Konvertierung der an der Busschnittstelle 13 seriell empfangenen Schaltdaten in digitale Schaltsignale für die parallelen Schalteingänge / -ausgänge 19, 21, und umgekehrt.

Die digitalen Schaltsignale können dadurch in dem Prozessabbild des verwendeten Feldbusses 23 auf einfache Weise gesteuert werden, ohne dass zusätzliche I/O-Module erforderlich sind, die separat für den speziellen Feldbus 23 parametriert werden müssen. Die Kombination aus Sensor 25 und Anschlussmodul 11 mit Gateway-Schaltung 27 und I/O-Schaltung 29 erscheint für den Anwender wie ein einziges Gerät, wobei sowohl der Sensor 25 als auch die Gateway-Schaltung 27 und die I/O-Schaltung 29 gemeinsam innerhalb der Bedienoberfläche des Sensors 25 parametriert werden können.

Da die Gateway-Schaltung 27 und die I/O-Schaltung 29 in das Anschlussmodul 11 eingebaut sind (Steckplatine 43 in Fig. 2), ist eine besonders kurze Leitungsverbindung zu den Parallel-Klemmverbindern 49 und somit zu den Schalteingängen/-ausgängen des Sensors 25 möglich.

Da die Gateway-I/O-Steckplatine 43 werkzeugfrei bzw. allenfalls mit einfachem Werkzeug auswechselbar ist, kann das Anschlussmodul 11 auf einfache Weise an verschiedene Feldbus-Systeme angepasst werden, und das betreffende Anschlussmodul 11 mit den weiteren Komponenten kann flexibel für verschiedene Feldbus-Systeme eingesetzt werden.

Der optionale Permanentspeicher 33 gestattet das nicht flüchtige Abspeichern von den Betriebsparametern, die die Identifizierung des angeschlossenen Sensors 25 durch den Feldbus 23 ermöglichen und die Art der Kommunikation mit dem Feldbus 23 festlegen. Indem das Anschlussmodul 11 mit einem derartigen Permanentspeicher 33 ausgestattet ist, stehen diese Betriebsparameter auch nach einer zwischenzeitlichen Deaktivierung des Anschlussmoduls 11 zur Verfügung, so dass nach einem Abschalten und einem neuerlichen Einschalten des Anschlussmoduls 11 keine Neuparametrierung erforderlich ist. Da der Permanentspeicher 33 in Form einer vom Anwender auswechselbaren Steckkarte 45 vorliegt, kann das Anschlussmodul 11, beispielsweise im Falle eines Defekts, auf besonders einfache Weise ausgetauscht werden, da durch Übernahme der Permanentspeicher-Steckkarte 45 in das neue Anschlussmodul die erforderlichen Betriebsparameter erhalten bleiben.

Die Parametrierung der Gateway-Schaltung 27 und der I/O-Schaltung 29 unter Zuhilfenahme des Permanentspeichers 33 kann auf folgende Weise erfolgen:

Nach einem Betriebsstart des Anschlussmoduls 11 - und aufgrund der gemeinsamen Spannungsversorgung auch des angeschlossenen Sensors 25 - wird über die serielle Datenschnittstelle 17 der Sensorschnittstelle 15 während eines begrenzten Parametrierungszeitintervalls eine Verbindung zwischen dem Sensor 25 und dem Permanentspeicher 33 des Anschlussmoduls 11 aufgebaut. Dabei erkennt der Sensor 25, ob er mit einem Anschlussmodul 11 verbunden und ob ein Permanentspeicher 33 mit gültigen Betriebsparametern vorhanden ist. Zutreffendenfalls liest der Sensor 25 die Betriebsparameter über die Sensorschnittstelle 15 aus dem Permanentspeicher 33 aus und überträgt die Betriebsparameter - wiederum über die Sensorschnittstelle 15 - an die Gateway-Schaltung 27 einschließlich der I/O-Schaltung 29. Dabei kann zwischenzeitlich innerhalb des Sensors 25 eine Überprüfung, ein zusätzliches Abspeichern und/oder ein Ergänzen der Betriebsparameter erfolgen.

Falls der Sensor 25 dagegen trotz seiner Verbindung mit dem Permanentspeicher 33 von diesem keine Betriebsparameter erhält - beispielsweise aufgrund eines Defekts des Permanentspeichers 33 -, so übermittelt er an an die Gateway-Schaltung 27 einschließlich der I/O-Schaltung 29 diejenigen Betriebsparameter, die der Sensor 25 in einem eigenen nichtflüchtigen Speicher gespeichert hat.

Falls umgekehrt die Gateway-Schaltung 27 des Anschlussmoduls 11 während des Parametrierungszeitintervalls nach einem Betriebsstart keine Betriebsparameter an der seriellen Datenschnittstelle 17 von dem Sensor 25 empfängt, liest sie aus dem Permanentspeicher 33 die zuletzt gespeicherten und verwendeten Betriebsparameter aus und verwendet diese für die Kommunikation mit dem Feldbus 23.

Aufgrund dieser automatischen Parametrierung der Gateway-Schaltung 27 einschließlich der I/O-Schaltung 29 muss der Anwender nicht zwei oder mehr Geräte separat parametrieren, um das System für die Verbindung mit dem Feldbus 23 zu konfigurieren. Stattdessen genügt es, wenn der Anwender lediglich den Sensor 25 innerhalb dessen Bedienoberfläche mit den Betriebsparametern initialisiert. Im Falle eines Austauschs des Sensors 25 ist ebenfalls keine Neuparametrierung erforderlich, da die zuvor an die Gateway-Schaltung 27 des Anschlussmoduls 11 übertragenen und dort im Permanentspeicher 33 gespeicherten Betriebsparameter weiter verwendet werden können.

Auch wenn das Anschlussmodul 11 über keinen Permanentspeicher 33 verfügt, ist es möglich, dass automatisch nach einem Neustart des Systems, vorzugsweise lediglich während eines begrenzten Parametrierungszeitintervalls, von dem angeschlossenen Sensor 25 über die serielle Datenschnittstelle 17 der Sensorschnittstelle 15 die im Sensor 25 gespeicherten Betriebsparameter an die Gateway-Schaltung 27 und gegebenenfalls an die I/O-Schaltung 29 übertragen werden. Auch in diesem Fall ergibt sich hierdurch der Vorteil, dass der Anwender nicht sowohl den Sensor 25 als auch die Gateway-Schaltung 27 des Anschlussmoduls 11 separat parametrieren muss.

### Bezugszeichenliste

- 11: Anschlussmodul
- 13: Busschnittstelle
- 15: Sensorschnittstelle
- 17: serielle Datenschnittstelle
- 19: Schalteingang
- 21: Schaltausgang
- 23: Feldbus
- 25: optoelektronischer Sensor
- 27: Gateway-Schaltung
- 29: I/O-Schaltung
- 33: Permanentspeicher
- 41: Grundplatine
- 43: Gateway-I / O-Steckplatine
- 45: Permanentspeicher-Steckkarte
- 47: Seriell-Steckverbinder
- 49: Parallel-Klemmverbinder
- 51: Gehäuse

## Patentansprüche

1. Anschlussmodul (11) zum Anschließen eines Sensors, insbesondere eines optoelektronischen Sensors (25), an einen Feldbus (23), mit
- einer Sensorschnittstelle (15, 49) zum Verbinden des Anschlussmoduls mit einer Schnittstelle eines Sensors,
- einer seriellen Busschnittstelle (13, 47) zum Verbinden des Anschlussmoduls mit einer Schnittstelle eines Feldbusses, und
- einer Gateway-Schaltung (27, 43), die mit der Busschnittstelle und der Sensorschnittstelle verbunden ist, um an der Busschnittstelle empfangene Daten in ein Datenformat eines angeschlossenen Sensors zu konvertieren und an der Sensorschnittstelle auszugeben, und um an der Sensorschnittstelle empfangenen Daten in ein Datenformat des Feldbusses zu konvertieren und an der Busschnittstelle auszugeben,
**dadurch gekennzeichnet,**
- **dass** die Sensorschnittstelle (15, 49) des Anschlussmoduls (11) eine serielle Datenschnittstelle (17) und wenigstens einen separaten, hierzu parallelen Schalteingang/-ausgang (19, 21) aufweist,
- **dass** in das Anschlussmodul (11) wenigstens eine I/O-Schaltung (29, 43) integriert ist, die mit der Busschnittstelle und der Sensorschnittstelle verbunden ist, um an der Busschnittstelle seriell empfangene Schaltdaten in Schaltsignale zu konvertieren und an dem parallelen Schalteingang/- ausgang der Sensorschnittstelle auszugeben, und um an dem Schalteingang/-ausgang der Sensorschnittstelle parallel empfangene Schaltsignale in Schaltdaten zu konvertieren und an der Busschnittstelle seriell auszugeben, und
- **dass** die Gatewäy-Schaltung (27, 43) und die I/O-Schaltung (29, 43) dergestalt konfiguriert sind, dass von einem angeschlossenen Sensor (25) über die Sensorschnittstelle (15) an die Gateway-Schaltung (27, 43) und an die I/O-Schaltung (29, 43) Betriebsparameter für die Kommunikation mit dem Feldbus (23) übermittelbar sind.

2. Anschlussmodul nach Anspruch 1,
**dadurch gekennzeichnet,**
**dass** die I/O-Schaltung (29) in die Gateway-Schaltung (27, 43) integriert ist,
und/oder
**dass** die Gateway-Schaltung (27, 43) als eine vom Anwender auswechselbare Einheit, insbesondere Steckkarte ausgebildet ist, und/oder
**dass** die Sensorschnittstelle (15, 49), die Busschnittstelle (13, 47), die Gateway-Schaltung (27, 43) und die I/O-Schaltung (29, 43) in einem gemeinsamen Gehäuse (51) angeordnet sind.

3. Anschlussmodul nach einem der vorhergehenden Ansprüche,
**dadurch gekennzeichnet,**
**dass** in das Anschlussmodul (11) ferner ein Permanentspeicher (33, 45) zum Speichern von Betriebsparametern für die Kommunikation der Gateway-Schaltung (27, 43) und der I/O-Schaltung (29, 43) mit dem Feldbus (23) integriert ist.

4. Anschlussmodul nach Anspruch 3,
**dadurch gekennzeichnet,**
**dass** der Permanentspeicher (33, 45) als eine vom Anwender auswechselbare Einheit ausgebildet ist,
und/oder
**dass** es sich bei den Betriebsparametern um Identifikationsnummern, Datenlängen oder Baud-Raten für den Feldbus handelt.

5. Anschlussmodul nach einem der vorhergehenden Ansprüche,
**dadurch gekennzeichnet,**
**dass** die Gateway-Schaltung (27, 43) und die I/O-Schaltung (29, 43) dergestalt konfiguriert sind, dass die Betriebsparameter bei Betriebsstart des Anschlussmoduls (11) oder des angeschlossenen Sensors (25) übermittelbar sind,
wobei die Gateway-Schaltung (27, 43) und die I/O-Schaltung (29, 43) insbesondere dergestalt konfiguriert sind, dass die Betriebsparameter bei Betriebsstart des Anschlussmoduls (11) oder des angeschlossenen Sensors (25) während eines begrenzten Parametrierungszeitintervalls übermittelbar sind.

6. Anschlussmodul nach einem der vorhergehenden Ansprüche,
**dadurch gekennzeichnet,**
**dass** das das Anschlussmodul (11) mit einem Permanentspeicher (33, 45) versehen ist, in dem die über die Sensorschnittstelle (15) übermittelten Betriebsparameter speicherbar sind,
wobei der Permanentspeicher (33, 45) direkt mit der Sensorschnittstelle (15) oder indirekt über die Gateway-Schaltung (27, 43) und die I/O-Schaltung (29, 43) mit der Sensorschnittstelle (15) verbunden ist.

7. Anschlussmodul nach Anspruch 6,
**dadurch gekennzeichnet,**
**dass** der Permanentspeicher (33, 45) dergestalt konfiguriert ist, dass unmittelbar nach Betriebsstart des Anschlussmoduls (11) oder des angeschlossenen Sensors (25) und noch vor einem Übermitteln von Betriebsparametern von dem angeschlossenen Sensor (25) Betriebsparameter, die in dem Permanentspeicher (33, 45) gespeichert sind, von dem Permanentspeicher (33, 45) über die Sensorschnittstelle (15) an den angeschlossenen Sensor (25) übermittelbar sind, und/oder
**dass** die Gateway-Schaltung (27, 43) und die I/O-Schaltung (29, 43) dergestalt konfiguriert sind, dass sie, wenn nach einem Betriebsstart des Anschlussmoduls (11) oder des angeschlossenen Sensors (25) keine Betriebsparameter von dem angeschlossenen Sensor (25) an die Gateway-Schaltung (27, 43) und die I/O-Schaltung (29, 43) übertragen werden, diejenigen Betriebsparameter für die Kommunikation mit dem Feldbus (23) verwenden, die in dem Permanentspeicher (33, 45) gespeichert sind.

8. Verfahren zum Anschließen eines Sensors, insbesondere eines optoelektronischen Sensors (25), über ein Anschlussmodul (11) an einen Feldbus (23), bei dem eine Schnittstelle des Sensors mit einer Sensorschnittstelle (15, 49) des Anschlussmoduls verbunden wird, eine Schnittstelle des Feldbusses (23) mit einer seriellen Busschnittstelle (13, 47) des Anschlussmoduls verbunden wird, und mit Hilfe einer Gateway-Schaltung (27, 43), die mit der Busschnittstelle und der Sensorschnittstelle verbunden ist, an der Busschnittstelle empfangene Daten in ein Datenformat eines angeschlossenen Sensors konvertiert werden und an eine Sensorschnittstelle ausgegeben werden und an der Sensorschnittstelle empfangene Daten in ein Datenformat des Feldbusses konvertiert werden und an der Busschnittstelle ausgegeben werden,
**dadurch gekennzeichnet,**
**dass** mit Hilfe einer I/O-Schaltung (29, 43), die in das Anschlussmodul (11) integriert ist, und mit der Busschnittstelle und der Sensorschnittstelle verbunden ist, an der Busschnittstelle seriell empfangene Schaltdaten in Schaltsignale konvertiert werden und an einen parallelen Schalteingang/-ausgang der Sensorschnittstelle ausgegeben werden, und an dem Schalteingang/-ausgang der Sensorschnittstelle parallel empfangene Schaltsignale in Schaltdaten konvertiert werden und an der Busschnittstelle seriell ausgegeben werden, wozu die Sensorschnittstelle (15, 49) des Anschlussmoduls (11)
eine serielle Datenschnittstelle (17) und wenigstens einen separaten, hierzu parallelen Schalteingang/-ausgang (19, 21) aufweist,
wobei ein an das Anschlussmodul (11) angeschlossener Sensor (25) über die Sensorschnittstelle (15) des Anschlussmoduls Betriebsparameter an die Gateway-Schaltung (27, 43) des Anschlussmoduls (11) übermittelt, und
die Gateway-Schaltung (27, 43) auf Grundlage der von dem Sensor (25) übermittelten Betriebsparameter mit dem Feldbus (23) kommuniziert.

9. Verfahren nach Anspruch 8,
**dadurch gekennzeichnet,**
**dass** der Sensor (25) die Betriebsparameter bei Betriebsstart des Anschlussmoduls (11) oder des Sensors (25) an die Gateway-Schaltung (27, 43) übermittelt,
wobei der Sensor (25) die Betriebsparameter insbesondere bei Betriebsstart des Anschlussmoduls (11) oder des Sensors (25) während eines begrenzten Parametrierungszeitintervalls an die Gateway-Schaltung (27, 43) übermittelt.

10. Verfahren nach einem der Ansprüche 8 oder 9,
**dadurch gekennzeichnet,**
**dass** die von dem Sensor (25) übertragenen Betriebsparameter in einem Permanentspeicher (33, 45) des Anschlussmoduls gespeichert werden.

11. Verfahren nach Anspruch 10,
**dadurch gekennzeichnet,**
**dass** unmittelbar nach Betriebsstart des Anschlussmoduls (11) oder des Sensors (25) und noch vor einem Übermitteln von Betriebsparametem von dem Sensor (25) an die Gateway-Schaltung (27, 43) Betriebsparameter, die in dem Permanentspeicher (33, 45) des Anschlussmoduls gespeichert sind, von dem Permanentspeicher (33, 45) an den Sensor (25) übermittelt werden,
und/oder
**dass** in dem Fall, dass nach einem Betriebsstart des Anschlussmoduls (11) oder des Sensors (25) keine Betriebsparameter von dem Sensor (25) an die Gateway-Schaltung (27, 43) übertragen werden, die Gateway-Schaltung (27, 43) auf Grundlage derjenigen Betriebsparameter mit dem Feldbus (23) kommuniziert, die in dem Permanentspeicher (33, 45) gespeichert sind.

12. Verfahren nach einem der Ansprüche 8 bis 11,
**dadurch gekennzeichnet,**
**dass** die Betriebsparameter in einem vom Anwender auswechselbaren Permanentspeicher (33, 45) des Anschlussmoduls (11) gespeichert werden,
und/oder
**dass** es sich bei den Betriebsparametern um Identifikationsnummern, Datenlängen oder Baud-Raten für den Feldbus handelt.

## Claims

1. A connection module (11) for the connection of a sensor, in particular of an optoelectronic sensor (25), to a fieldbus (23), comprising
- a sensor interface (15, 49) for the connection of the connection module to an interface of a sensor;
- a serial bus interface (13, 47) for the connection of the connection module to an interface of a fieldbus; and
- a gateway circuit (27, 43), which is connected to the bus interface and to the sensor interface to convert data received at the bus interface into a data format of a connected sensor and to output them at the sensor interface and to convert data received at the sensor interface into a data format of the fieldbus and to output them at the bus interface,
**characterized in that**
- the sensor interface (15, 49) of the connection module (11) has a serial data interface (17) and at least one separate switch input/output (19, 21) parallel thereto;
- **in that** at least one I/O circuit (29, 43) is integrated into the connection module (11) and is connected to the bus interface and to the sensor interface to convert switching data serially received at the bus interface into switching signals and to output them at the parallel switch input/output of the sensor interface and to convert switching signals received in parallel at the switch input/output of the sensor interface into switching data and to output them serially at the bus interface; and
- **in that** the gateway circuit (27, 43) and the I/O circuit (29, 43) are configured such that operating parameters for the communication with the fieldbus (23) can be communicated to the gateway circuit (27, 43) and to the I/O circuit (29, 43) from a connected sensor (25) via the sensor interface (15).

2. A connection module in accordance with claim 1,
**characterized in that**
the I/O circuit (29) is integrated into the gateway circuit (27, 43); and/or
**in that** the gateway circuit (27, 43) is made as a unit replaceable by the user, in particular a card;
and/or
**in that** the sensor interface (15, 49), the bus interface (13, 47), the gateway circuit (27, 43) and the I/O circuit (29, 43) are arranged in a common housing (51).

3. A connection module in accordance with one of the preceding claims,
**characterized in that**
a permanent memory (33, 45) is furthermore integrated into the connection module (11) for the storage of operating parameters for the communication of the gateway circuit (27, 43) and of the I / O circuit (29, 43) with the fieldbus (23).

4. A connection module in accordance with claim 3,
**characterized in that**
the permanent memory (33, 45) is made as a unit replaceable by the user;
and/or
**in that** the operating parameters are identification numbers, data lengths or baud rates for the fieldbus.

5. A connection module in accordance with any one of the preceding claims,
**characterized in that**
the gateway circuit (27, 43) and the I/O circuit (29, 43) are configured such that the operating parameters can be transmitted at the start of operation of the connection module (11) or of the connected sensor (25);
wherein the gateway circuit (27, 43) and the I/O circuit (29, 43) are in particular configured such that the operating parameters can be transmitted at the start of operation of the connection module (11) or of the connected sensor (25) during a limited parameterization time interval.

6. A connection module in accordance with any one of the preceding claims,
**characterized in that**
the connection module (11) is provided with a permanent memory (33, 45) in which the operating parameters transmitted via the sensor interface (15) can be stored,
wherein the permanent memory (33, 45) is connected directly to the sensor interface (15) or indirectly to the sensor interface (15) via the gateway circuit (27, 43) and the I/O circuit (29, 43).

7. A connection module in accordance with claim 6,
**characterized in that**
the permanent memory (33, 45) is configured such that operating parameters stored in the permanent memory (33, 45) can be transmitted from the permanent memory (33, 45) via the sensor interface (15) to the connected sensor (25) directly after the start of operation of the connection module (11) or of the connected sensor (25) and still before a transmission of operating parameters from the connected sensor (25);
and/or
**in that** the gateway circuit (27, 43) and the I/O circuit (29, 43) are configured such that, if no operating parameters are transmitted by the connected sensor (25) to the gateway circuit (27, 43) and to the I/O circuit (29, 43) after a start of operation of the connection module (11) or of the connected sensor (25), they use those operating parameters for the communication with the fieldbus (23) which are stored in the permanent memory (33, 45).

8. A method for the connection of a sensor, in particular of an optoelectronic sensor (25), via a connection module (11) to a fieldbus (23), wherein an interface of the sensor is connected to a sensor interface, an interface of the fieldbus (23) is connected to a bus interface (13, 47) of the connection module, and data received at the bus interface are converted into a data format of a connected sensor with the aid of a gateway circuit (27, 43) which is connected to the bus interface and to the sensor interface and are output to a sensor interface and data received at the sensor interface are converted into a data format of the fieldbus and are output at the bus interface, **characterized in that**
switching data serially received at the bus interface are converted into switching signals with the help of an I/O circuit (29, 43) which is integrated into the connection module (11) and is connected to the bus interface and to the sensor interface and are output at a parallel switch input/output of the sensor interface and switching signals received in parallel at the switch input/ output of the sensor interface are converted into switching data and are output serially at the bus interface, for which purpose the sensor interface (15, 49) of the connection module (11) has a serial data interface (17) and at least one separate switch input/output (19, 21) parallel thereto, wherein a sensor (25) connected to the connection module (11) transmits operating parameters via the sensor interface (15) of the connection module to the gateway circuit (27, 43) of the connection module (11); and
the gateway circuit (27, 43) communicates with the fieldbus (23) on the basis of the operating parameters transmitted by the sensor (25).

9. A method in accordance with claim 8,
**characterized in that**
the sensor (25) transmits the operating parameters to the gateway circuit (27, 43) at the start of operation of the connection module (11) or of the sensor (25);
wherein the sensor (25) in particular transmits the operating parameters to the gateway circuit (27, 43) at the start of operation of the connection module (11) or of the sensor (25) during a limited parameterization time interval.

10. A method in accordance with one of the claims 8 or 9, **characterized in that**
the operating parameters transmitted by the sensor (25) are stored in a permanent memory (33, 45) of the connection module.

11. A method in accordance with claim 10,
**characterized in that**
operating parameters stored in the permanent memory (33, 45) of the connection module are transmitted from the permanent memory (33, 45) to the sensor (25) directly after the start of operation of the connection module (11) or of the sensor (25) and still before a transmission of operating parameters by the sensor (25) to the gateway circuit (27, 43);
and/or
**in that**, in the event that no operating parameters are transmitted by the sensor (25) to the gateway circuit (27, 43) after a start of operation of the connection module (11) or of the sensor (25), the gateway circuit (27, 43) communicates with the fieldbus (23) on the basis of those operating parameters which are stored in the permanent memory (33, 45).

12. A method in accordance with any one of the claims 8 to 11, **characterized in that**
the operating parameters are stored in a permanent memory (33, 45) of the connection module (11) replaceable by the user: and/or
**in that** the operating parameters are identification numbers, data lengths or baud rates for the fieldbus.

## Revendications

1. Module de connexion (11) pour connecter un capteur, en particulier un capteur optoélectronique (25) avec un bus de secteur (23), comprenant
- une interface de capteur (15, 49) pour la liaison du module de connexion avec une interface d'un capteur,
- une interface de bus série (13, 47) pour la liaison du module de connexion avec une interface d'un bus de secteur, et
- un circuit passerelle (27, 43), qui est relié à l'interface de bus et à l'interface de capteur, afin de convertir les données reçues à l'interface de bus en un format de données d'un capteur connecté et de les fournir à l'interface de capteur, et afin de convertir les données reçues à l'interface de capteur en un format de données du bus de secteur et de les fournir à l'interface de bus,
**caractérisé en ce que**
- l'interface de capteur (15, 49) du module de connexion (11) comprend une interface de données série (17) et au moins une entrée/sortie de commutation séparée (19, 21) parallèle à celle-ci,
- au moins un circuit d'entrée/sortie (29, 43) est intégré au module de connexion (11), circuit qui est relié à l'interface de bus et à l'interface de capteur afin de convertir des données de commutation reçues en série à l'interface de bus en signaux de commutation et de les fournir à l'entrée/sortie de commutation parallèle de l'interface de capteur, et pour convertir des signaux de commutation reçus en parallèle à l'entrée/sortie de commutation de l'interface de capteur en données de commutation et de les fournir en série à l'interface de bus, et
- le circuit passerelle (27, 43) et le circuit d'entrée/sortie (29, 43) sont configurés de telle façon que les paramètres de service pour la communication avec le bus de secteur (23) sont transmissibles via l'interface de capteur (15) vers le circuit passerelle (27, 43) et vers le circuit d'entrée/sortie (29, 43).

2. Module de connexion selon la revendication 1,
**caractérisé en ce que** le circuit d'entrée/sortie (29) est intégré dans le circuit passerelle (27, 43),
et/ou **en ce que** le circuit passerelle (27, 43) est réalisé sous forme d'une unité interchangeable par l'utilisateur, en particulier d'une carte à enficher,
et/ou **en ce que** l'interface de capteur (15, 49), l'interface de bus (13, 47), le circuit passerelle (27, 43) et le circuit d'entrée/sortie (29, 43) sont agencés dans un boîtier commun (51).

3. Module de connexion selon l'une des revendications précédentes,
**caractérisé en ce qu'**une mémoire permanente (33, 45) pour mémoriser des paramètres de service pour la communication du circuit passerelle (27, 43) et du circuit d'entrée/sortie (29, 43) avec le bus de secteur (23) est intégrée dans le module de connexion (11).

4. Module de connexion selon la revendication 3,
**caractérisé en ce que** la mémoire permanente (33, 45) est réalisée sous forme d'une unité interchangeable par l'utilisateur,
et/ou **en ce que** les paramètres de service sont des numéros d'identification, des longueurs de données ou des débits en bauds pour le bus de secteur.

5. Module de connexion selon l'une des revendications précédentes,
**caractérisé en ce que** le circuit passerelle (27, 43) et le circuit d'entrée/sortie (29, 43) sont configurés de telle façon que les paramètres de service sont transmissibles au démarrage du fonctionnement du module de connexion (11) ou du capteur connecté (25),
dans lequel le circuit passerelle (27, 43) et le circuit d'entrée/sortie (29, 43) sont en particulier configurés de telle façon que les paramètres de service sont transmissibles pendant un intervalle temporel de paramétrage limité au démarrage du fonctionnement du module de connexion (11) ou du capteur connecté (25).

6. Module de connexion selon l'une des revendications précédentes,
**caractérisé en ce que** le module de connexion (11) est doté d'une mémoire permanente (33, 45) dans laquelle les paramètres de service transmis via l'interface de capteur (15) peuvent être mémorisés,
dans lequel la mémoire permanente (33, 45) est reliée directement à l'interface de capteur (15) ou indirectement à l'interface de capteur (15) via le circuit passerelle (27, 43) et le circuit d'entrée/sortie (29, 43).

7. Module de connexion selon la revendication 6,
**caractérisé en ce que** la mémoire permanente (33, 45) est configurée de telle façon que des paramètres de service, qui sont mémorisés dans la mémoire permanente (33, 45), sont transmissibles immédiatement après le démarrage du fonctionnement du module de connexion (11) ou du capteur connecté (25) et encore avant une transmission de paramètres de service depuis le capteur connecté (25), depuis la mémoire permanente (33, 45) via l'interface de capteur (15) au capteur connecté (25),
et/ou **en ce que** le circuit passerelle (27, 43) et le circuit d'entrée/sortie (29, 43) sont configurés de telle façon que, si après un démarrage de fonctionnement du module de connexion (11) ou du capteur connecté (25) aucun paramètre de service n'est transmis depuis le capteur connecté (25) vers le circuit passerelle (27, 43) et le circuit d'entrée/sortie (29, 43), ils utilisent ceux des paramètres de service pour la communication avec le bus de secteur (23) qui sont mémorisés dans la mémoire permanente (33, 45).

8. Procédé pour la connexion d'un capteur, en particulier d'un capteur optoélectronique (25), via un module de connexion (11), à un bus de secteur (23), dans lequel une interface du capteur est reliée à une interface de capteur (15, 49) du module de connexion, une interface du bus de secteur (23) est reliée à une interface de bus série (13, 47) du module de connexion et, à l'aide d'un circuit passerelle (27, 43), qui est relié à l'interface de bus et à l'interface de capteur, des données reçues à l'interface de bus sont converties en un format de données d'un capteur connecté et sont fournies à une interface de capteur, et des données reçues à l'interface de capteur sont converties en un format de données du bus de secteur et sont fournies à l'interface de bus,
**caractérisé en ce qu'**au moyen d'un circuit d'entrée/sortie (27, 43), qui est intégré dans le module de connexion (11) et qui est relié à l'interface de bus et à l'interface de capteur, des données de commutation reçues en série à l'interface de bus sont converties en signaux de commutation et sont fournies à une entrée/sortie de commutation parallèle de l'interface de capteur, et des signaux de commutation reçus en parallèle à l'entrée/sortie de commutation de l'interface de capteur sont convertis en données de commutation et sont fournis en série à l'interface de bus, ce pourquoi l'interface de capteur (15, 49) du module de connexion (11) comprend une interface de données série (17) et au moins une entrée/sortie de commutation séparée (19, 21) parallèle à celle-ci,
dans lequel un capteur (25) connecté au module de connexion (11) transmet via l'interface de capteur (15) du module de connexion des paramètres de service au circuit passerelle (27, 43) du module de connexion (11), et
le circuit passerelle (27, 48) communique avec le bus de secteur (23) en se basant sur les paramètres de service transmis depuis le capteur (25).

9. Procédé selon la revendication 8,
**caractérisé en ce que** le capteur (25) transmet au circuit passerelle (27, 43) les paramètres de service lors du démarrage du fonctionnement du module de connexion (11) ou du capteur (25),
dans lequel le capteur (25) transmet au circuit passerelle (27, 43) les paramètres de service en particulier lors du démarrage du fonctionnement du module de connexion (11) ou du capteur (25) pendant un intervalle temporel de paramétrage limité.

10. Procédé selon l'une des revendications 8 ou 9,
**caractérisé en ce que** les paramètres de service transmis depuis le capteur (25) sont mémorisés dans une mémoire permanente (33, 45) du module de connexion.

11. Procédé selon la revendication 10,
**caractérisé en ce que**, immédiatement après le démarrage du fonctionnement du module de connexion (11) du capteur (25) et encore avant une transmission de paramètres de service depuis le capteur (25) au circuit passerelle (27, 43), des paramètres de service qui sont mémorisés dans la mémoire permanente (33, 45) du module de connexion sont transmis de la mémoire permanente (33, 45) au capteur (25),
et/ou **en ce que** dans le cas où après un démarrage du fonctionnement du module de connexion (11) ou du capteur (25) aucun paramètre de service n'est transmis depuis le capteur (25) vers le circuit passerelle (27, 43), le circuit passerelle (27, 43) communique avec le bus de secteur (23) en se basant sur ceux des paramètres de service qui sont mémorisés dans la mémoire permanente (33, 45).

12. Procédé selon l'une des revendications 8 à 11,
**caractérisé en ce que** les paramètres de service sont mémorisés dans une mémoire permanente (33, 45) du module de connexion (11) laquelle est interchangeable par l'utilisateur,
et/ou **en ce que** les paramètres de service sont des numéros d'identification, des longueurs de données ou des débits en bauds pour le bus de secteur.
